# EUROPÄISCHE PATENTSCHRIFT

(11) **EP 3 955 510 B1**
(45) Veröffentlichungstag und Bekanntmachung des Hinweises auf die Patenterteilung: **19.04.2023**
(21) Anmeldenummer: 20191225.0
(22) Anmeldetag: 14.08.2020
(51) Int. Cl.: H04L 9/08

(54) **KOMMUNIKATIONSSYSTEM MIT MEHRSTUFIGEM SICHERHEITSKONZEPT**
COMMUNICATION SYSTEM WITH MULTI-STAGE SECURITY CONCEPT
SYSTÈME DE COMMUNICATION AYANT UN CONCEPT DE SÉCURITÉ À PLUSIEURS NIVEAUX

(43) Veröffentlichungstag der Anmeldung: 16.02.2022
(73) Patentinhaber: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Brandt & Nern Patentanwälte

(56) Entgegenhaltungen:
- EP-A1- 3 267 619
- DE-A1-102014 212 219
- US-A1- 2005 076 197
- US-A1- 2016 330 209

## Beschreibung

Die Erfindung betrifft ein mehrstufiges, das heißt mindestens zweistufiges Sicherheitskonzept für die Übertragung von Nutzdaten in einem aus zwei Endpunkten und aus einer diese beiden Endpunkte miteinander verbindenden Datenverbindung bestehenden Kommunikationssystem. Das Sicherheitskonzept und somit die Erfindung beziehen sich auf die Verschlüsselung zwischen den beiden Endpunkten übertragener Nutzdaten, das heißt auf die Sicherheit dieser Verschlüsselung. Gegenstände der Erfindung sind ein Verfahren, welchem hinsichtlich der angesprochenen Verschlüsselung der Nutzdaten ein mindestens zweistufiges Sicherheitskonzept zugrunde liegt, sowie ein zur Durchführung dieses Verfahrens ausgebildetes Kommunikationssystem. Entsprechend einem bevorzugten Anwendungsfall bezieht sich die Erfindung auf ein Kommunikationssystem, bei welchem es sich bei den beiden durch die Datenverbindung miteinander verbundenen Endpunkten um zwei Netzwerkknoten in einem gegebenenfalls, das heißt typischerweise, noch weitere Netzwerkknoten umfassenden Netzwerk handelt. Jedoch ist die Erfindung hierauf nicht beschränkt. Vielmehr kann es sich bei den Endpunkten um unterschiedlichste telekommunikative Einrichtungen, Systeme oder Teile davon handeln, zwischen denen Nutzdaten ausgetauscht werden, so beispielsweise auch um Einrichtungen innerhalb eines Netzwerkknotens.

Der Sicherheit über Kommunikationsnetze, das heißt innerhalb von Kommunikationssystemen, zwischen Teilnehmern übertragener Daten kommt eine sehr große und im Hinblick auf dafür zu erfüllende Anforderungen noch stark wachsende Bedeutung zu. Dies gilt im Grunde für alle Arten von Daten, einschließlich für Daten, welche digital gewandelte Sprachnachrichten betreffen, aber auch für insoweit ebenfalls Daten darstellende Schlüssel, welche zwischen Teilnehmern zur späteren Verwendung für die Verschlüsselung der eigentlichen Nutzdaten und/oder für die Absicherung der zum Übertragen dieser Nutzdaten verwendeten Verbindungen dienen. Darüber hinaus kann es sich bei entsprechend zu sichernden Daten außerdem auch um Netzwerkmanagementdaten, Steuerdaten in einem Netzwerk oder um sonstige Netzwerkdaten beliebiger Art handeln.

Demgemäß sind die Endpunkte moderner Kommunikationssysteme, wie Netzwerkknoten von telekommunikativen Netzwerken, regelmäßig mit Ver- und Entschlüsselungseinrichtungen ausgestattet, welche nachfolgend, sprachlich vereinfachend, auch als Verschlüsseler bezeichnet werden sollen. Mittels der betreffenden Einrichtungen werden die zu übertragenden Daten vor ihrer Aussendung durch den sie aussendenden Endpunkt entsprechend einem dafür in dem Endpunkt implementierten Verfahren verschlüsselt und nach der Übertragung bei dem sie empfangenden Endpunkt unter Anwendung desselben Verfahrens, das heißt in korrespondierender Weise, wieder entschlüsselt.

Marktübliche, gegenwärtig breit im Einsatz befindliche Verschlüsseler bedienen sich bei der Verschlüsselung von Daten häufig eines symmetrischen Verschlüsselungsverfahrens, für welches sie einen Schlüssel einsetzen, den die Endpunkte zuvor nach einem Public-Key-Verfahren (also asymmetrisch) als sogenanntes Shared Secret ausgetauscht haben. Hierbei ist anzumerken, dass ein wesentliches Problem bei der symmetrischen Verschlüsselung von Daten, also beim Einsatz eines Verschlüsselungsverfahrens, für welches zum Verschlüsseln der Daten derselbe Schlüssel verwendet wird wie zu deren Entschlüsselung an der empfangenden Stelle, die Frage eines sicheren Austauschs des insoweit verwendeten Schlüssels ist.

Insbesondere zu diesem Zweck wurde ursprünglich das Public-Key-Verfahren entwickelt, bei dem ein seitens eines Teilnehmers, beispielsweise eines ersten Endpunkts, generierter Schlüssel mit einem öffentlichen Schlüssel des für den Empfang dieses generierten Schlüssels bestimmten anderen Teilnehmers, das heißt des für den Empfang bestimmten Endpunkts, verschlüsselt wird und nach der Übertragung auf der empfangenden Seite wiederherstellbar ist durch Entschlüsselung der empfangenen Bitsequenz mit dem privaten Schlüssel des Empfängers. Im Einzelfall werden Public-Key-Verfahren, so beispielsweise bei der Übertragung von E-Mails, auch zur unmittelbaren Ver- und Entschlüsselung von Nutzdaten verwendet. Ein weit verbreitetes Verfahren ist dabei das Diffie-Hellman-Protokoll, welches häufig in Kombination mit einem der Authentifikation der beiden die Daten austauschenden Seiten dienenden RSA-Verfahren (RSA = Rivest, Shamir, Adleman) verwendet wird.

Soweit ein Public-Key-Verfahren zum Austausch eines als Schlüssel dienenden Shared Secret verwendet wird, erfolgt im Nachgang der Austausch der eigentlichen Nutzdaten unter Verwendung dieses zuvor ausgetauschten Schlüssels durch Verschlüsselung nach einem symmetrischen Verschlüsselungsverfahren, wie beispielsweise AES-256 (AES = Advanced Encryption Standard) oder Twofish-256.

EP3267619 beschreibt ein Verfahren zur Herstellung einer Ausfallsicherung in einem Netzwerk.

Die beiden vorgenannten symmetrischen Verschlüsselungsverfahren gelten dabei als sicher. Indes besteht ein Risiko bei der zuvor beschriebenen Vorgehensweise bei der Übertragung eines hierfür verwendeten Schlüssels darin, dass der nach dem Public-Key-Verfahren ausgetauschte, später für die symmetrische Verschlüsselung der Nutzdaten verwendete Schlüssel, zum Beispiel durch einen Man-in-the-Middle-Angriff, abgefangen werden und somit die nachfolgend verschlüsselt übertragenen Nutzdaten abgehört werden könnten.

Neuere Verschlüsselungstechniken beruhen auf der Verwendung quantensicherer Schlüssel (Quantenschlüssel), das heißt von Schlüsseln und Verschlüsselungstechniken, welche auch im Hinblick auf einen möglichen Angriff mit gegenwärtig in Entwicklung befindlichen Quantencomputern als sicher, also als nicht zu brechen gelten. Allerdings sind die hierfür erforderlichen technischen Systeme sehr aufwendig, komplex und teuer. Insoweit wird im Hinblick auf den Einsatz derartiger Systeme immer auch eine Abwägung zu treffen sein, zwischen dem mittels der entsprechenden Technik Machbaren und den dafür entstehenden Kosten.

Vor diesem Hintergrund ist zu erwarten, dass der Einsatz entsprechender Technik, also insbesondere von Systemen, welche sich bei der Schlüsselerzeugung quantenmechanischer Effekte bedienen, Bereichen mit sehr hohen speziellen Sicherheitsanforderungen, wie beispielsweise den Kernnetzen von Telekommunikationsunternehmen, oder aber zahlungskräftigen Kunden mit einem erhöhten Sicherheitsbedürfnis vorbehalten bleiben wird.

Aufgabe der Erfindung ist es, betreffend die Übertragung von Nutzdaten in einem Kommunikationssystem, eine Lösung für ein flexibles Sicherheitskonzept zur Verfügung zu stellen. Hierfür sind ein entsprechendes Verfahren anzugeben und ein zur Durchführung des Verfahrens ausgebildetes Kommunikationssystem bereitzustellen.

Die Aufgabe wird durch ein Verfahren mit den Merkmalen des Patentanspruchs 1 gelöst. Ein die Aufgabe lösendes, zur Durchführung des Verfahrens geeignetes Kommunikationssystem wird durch den ersten Sachanspruch charakterisiert. Vorteilhafte Aus- und Weiterbildungen der Erfindung sind durch die jeweiligen Unteransprüche gegeben.

Das eingangs angesprochene Sicherheitskonzept betrifft den Betrieb eines aus zwei Endpunkten und aus einer Datenverbindung zwischen diesen Endpunkt bestehenden Kommunikationssystems. Vorzugsweise (aber nicht zwingend und insoweit auch nicht beschränkend) bezieht sich die Erfindung hierbei auf ein Verfahren, welches für ein Kommunikationssystem verwendet wird, in welchem es sich bei den durch die Datenverbindung miteinander verbundenen Endpunkten um zwei Netzwerkknoten in einem Netzwerk handelt. Bei den angesprochenen Endpunkten des Kommunikationssystems kann es sich aber zum Beispiel auch um miteinander verbundene Komponenten innerhalb eines Netzwerkknotens handeln. Das zur Lösung vorgeschlagene Verfahren geht davon aus, dass zwischen dem ersten Endpunkt und dem zweiten Endpunkt des vorgenannten Kommunikationssystems ausgetauschte Nutzdaten symmetrisch verschlüsselt werden. Die symmetrische Verschlüsselung der Nutzdaten erfolgt hierbei mittels eines in den beiden Endpunkten vorhandenen Schlüssels, der auf einer in dem ersten Endpunkt erzeugten, nach dem Public-Key-Verfahren als Shared Secret an den zweiten Endpunkt übertragenen Zufallszahl basiert.

Erfindungsgemäß ist es dabei vorgesehen, dass in einem Basisbetrieb des Kommunikationssystems unmittelbar die vorgenannte Zufallszahl, also das zwischen den Endpunkten nach dem Public-Key-Verfahren ausgetauschte Shared Secret selbst, zur symmetrischen Verschlüsselung der zwischen den Endpunkten übertragenen Nutzdaten verwendet wird. Bei einem Komfortbetrieb des Kommunikationssystems, nämlich in einem Betrieb mit in Bezug auf die Verschlüsselung der Nutzdaten erhöhter Sicherheit, erfolgt hingegen die symmetrische Verschlüsselung der Nutzdaten mittels eines Schlüssels, der gebildet wird durch eine bitweise XOR-Verknüpfung des Basisschlüssels mit einem in beiden Endpunkten vorliegenden Zusatzschlüssel, bei welchem es sich um einen Quantenschlüssel, das heißt um einen nach einem quantensicheren Verfahren erzeugten Schlüssel, handelt.

Das Verfahren ist hierbei weiterhin so gestaltet, dass das Kommunikationssystem im Falle seiner Nutzung in dem zuvor genannten Komfortbetrieb und einer dabei auftretenden Störung automatisiert in den Basisbetrieb zurückfällt, bei welchem die Verschlüsselung der Nutzdaten unmittelbar mittels der nach dem Public-Key-Verfahren ausgetauschten, als Basisschlüssel dienenden Zufallszahl erfolgt. Im Hinblick auf die beiden vorgenannten Betriebsmodi liegt des Kommunikationssystems liegt diesem demnach ein mindestens zweistufiges Sicherheitskonzept zugrunde, wobei weitere, insbesondere gemäß entsprechender Ausgestaltungen und Weiterbildungen des Verfahrens vorgesehene Aspekte, je nach Standpunkt, auch als weitere Sicherheitsstufe dieses Konzeptes angesehen werden können.

Der Begriff "Komfortbetrieb" für die Betriebsart, bei welcher die Verschlüsselung der Nutzdaten mittels eines durch bitweise XOR-Verknüpfung des Basisschlüssels mit einem Zusatzschlüssel erzeugten Schlüssels erfolgt, ist dabei im Grunde willkürlich und dient in den weiteren Darstellungen lediglich der sprachlichen Vereinfachung. Diese Bezeichnung ist insofern willkürlich, als es sich je nach Konfiguration und Anordnung des angesprochenen Kommunikationssystems in einem Gesamtsystem (Netzwerk) bei dieser Betriebsart auch um einen Regelbetrieb des Kommunikationssystems handeln kann. Letzteres kann beispielsweise insbesondere der Fall sein, wenn das betrachtete Kommunikationssystem Teil des Kernnetzes eines von einem Provider unterhaltenen Weitverkehrsnetzes ist. Hier wird dann regelmäßig, also im Regelbetrieb, eine Verschlüsselung mit einem höheren Maß an Sicherheit zum Einsatz gelangen, bei welcher die Nutzdaten nicht lediglich mittels des im Public-Key-Verfahren zwischen den Endpunkten des Kommunikationssystems ausgetauschten (und hierbei möglicherweise durch einen Angreifer abgefangenen) Shared Secret, sondern mit einem im Wege einer XOR-Verknüpfung dieser Zufallszahl mit einem Zusatzschlüssel erzeugten Schlüssel erfolgt. Das System geht hierbei zum Beispiel im Falle einer Störung in den vermeintlich (aber nicht unbedingt tatsächlich) weniger sicheren Basisbetrieb.

Andererseits kann es aber auch vorgesehen sein, dass ein Kommunikationssystem gewissermaßen standardmäßig in dem angesprochenen Basisbetrieb arbeitet, bei welchem die Verschlüsselung der Nutzdaten unmittelbar mittels des im Public-Key-Verfahren ausgetauschten Schlüssels (der ausgetauschten Zufallszahl) erfolgt. Hierbei kann es dann weiterhin vorgesehen sein, dass dem sehr sicherheitsbewussten Anwender oder einem Anwender mit grundsätzlich höheren Sicherheitsanforderungen die Möglichkeit eingeräumt wird, im Sinne einer kostenpflichtigen, zusätzlich buchbaren Option das Kommunikationssystem in der sichereren, vor diesem Hintergrund als "Komfortbetrieb" bezeichneten Betriebsart mit Verwendung eines durch XOR-Verknüpfung von Basisschlüssel und Zusatzschlüssel entstandenen Schlüssels zu nutzen. Zur Frage dessen, wie Letzteres, also die Frage des Hinzubuchens des Komfortbetriebs, realisiert sein kann, sollen später noch einige Ausführungen erfolgen.

Ergänzend sei an dieser Stelle darauf hingewiesen, dass im Zusammenhang mit der Erläuterung des erfindungsgemäßen Grundprinzips sowie mit der in Patentansprüchen charakterisierten Lösung lediglich exemplarisch (ebenfalls zur sprachlichen Vereinfachung) von einem Basisschlüssel gesprochen wird. In der Praxis werden hingegen regelmäßig mehrere Basisschlüssel zwischen den Endpunkten - wie beispielsweise Netzwerkknoten - ausgetauscht werden sowie mehrere Quantenschlüssel von dem gemeinsamen, bei beiden Endpunkten vorliegenden Vorrat an Quantenschlüsseln umfasst sein. Insoweit wird vorzugsweise für jeden Übertragungsvorgang ein jeweils anderer Basisschlüssel (Basisbetrieb) oder eine jeweils andere durch XOR-Verknüpfung von Basisschlüssel und Zusatzschlüssel gebildete Bitsequenz (Komfortbetrieb) für die Verschlüsselung der übertragenen Nutzdaten zum Einsatz gelangen.

Das heißt, jeder Schlüssel beziehungsweise jede als Schlüssel dienende Bitfolge wird vorzugsweise nur einmal Verwendung finden. Ganz besonders bevorzugt ist dabei eine Verwendung des entsprechenden Schlüssels als One Time Pad, wobei der betreffende Schlüssel dieselbe Bitlänge aufweist, wie der Block in einem Übertragungsvorgang zu übertragender Nutzdaten. In jedem Falle ist daher von dem Patentanspruch 1 die Möglichkeit umfasst, dass zwischen den Endpunkten des Kommunikationssystems fortwährend Schlüssel nach dem Public-Key-Prinzip ausgetauscht werden, welche im Basisbetrieb unmittelbar zur Verschlüsselung von Nutzdaten oder im Komfortbetrieb zur Bildung der zur Verschlüsselung der Nutzdaten dienenden Bitfolge verwendet werden.

An dieser Stelle sei nochmals betont, dass es sich bei den vorstehend angesprochenen Endpunkten um unterschiedlichste telekommunikative Einrichtungen, Systeme oder Teile davon handeln kann, zwischen denen Nutzdaten ausgetauscht werden, so beispielsweise auch um Netzwerkknoten eines Netzwerks oder aber auch um Einrichtungen innerhalb solcher Netzwerkknoten.

Im Hinblick auf eine tatsächlich deutlich erhöhte Sicherheit der Verschlüsselung der Nutzdaten im Komfortbetrieb ist das Verfahren entsprechend einer bevorzugten Ausbildungsform so gestaltet, dass es sich bei dem für die bitweise XOR-Verknüpfung mit dem Basisschlüssel verwendeten Zusatzschlüssel um einen von mehreren, in beiden Endpunkten vorliegenden Quantenschlüsseln handelt. Hierbei wird zwischen den Endpunkten zusätzlich ein Identifier ausgetauscht, welcher den zur XOR-Verknüpfung mit dem Basisschlüssel jeweils zu verwendenden, wie gesagt, in beiden Endpunkten vorliegenden Zusatzschlüssel (Quantenschlüssel) eindeutig bezeichnet. Die Übertragung dieses Identifiers kann beispielsweise zusammen mit dem unter Anwendung des Public-Key-Verfahrens übertragenen Shared Secret, also zusammen mit dem Austausch des Basisschlüssels, erfolgen oder auch in einem gesonderten Übertragungsvorgang.

Durch die Verwendung eines Quantenschlüssels als Zusatzschlüssel wird im Komfortbetrieb ein sehr hohes Maß an Sicherheit bei der Verschlüsselung der Nutzdaten erreicht, da insoweit von einer Verschlüsselung auszugehen ist, die auch nicht durch den Einsatz von Quantencomputern gebrochen werden kann. Gleichwohl bietet das erfindungsgemäße, im Hinblick auf seine beiden möglichen Betriebsmodi, mindestens zweistufige Sicherheitskonzept mit dem Basisbetrieb die Möglichkeit, auch im Falle einer Störung der die Zusatzschlüssel in Form von Quantenschlüsseln bereitstellenden Systeme oder im Falle dessen, dass einmal nicht genug Zusatzschlüssel zur Verfügung stehen, wenigstens ein Mindestmaß an Sicherheit bei der Verschlüsselung von Nutzdaten, insbesondere in Bezug auf Datenverkehre auf dem Layer 1, dem Layer 2 oder dem Layer 3 des OSI-Schichtenmodels zur Verfügung stellen zu können.

Die Erfindung geht also von der Überlegung aus, für besonders sicherheitssensible Bereiche, wie beispielsweise Kernnetze, oder wunschgemäß, gegen Aufpreis, einen Betriebsmodus (Komfortbetrieb) mit sehr hoher Sicherheit bezüglich der Verschlüsselung der Nutzdaten zu ermöglichen, aber für den Fall, dass dieser Betriebsmodus nicht zur Verfügung steht, zumindest einen Basisbetrieb zu ermöglichen, bei dem auch noch ein hohes Maß an Sicherheit besteht.

Die Sicherheit im Basisbetrieb lässt sich noch dadurch erhöhen, dass entsprechend einer vorgesehenen, besonders vorteilhaften sowie für die Umsetzung in der Praxis favorisierten Weiterbildung des erfindungsgemäßen Verfahrens die im Basisbetrieb ausschließlich verwendete, als Shared Secret im Public-Key-Verfahren ausgetauschte Zufallszahl zwischen den Endpunkten unter Anwendung eines PQC-Verschlüsselungsverfahrens (PQC = Post Quantum Cryptography) übertragen wird.

Während Quantenschlüssel, also mittels quantenmechanischer Verfahren erzeugte Schlüssel beziehungsweise auf Quanteneffekten beruhende Verschlüsselungsverfahren, bewiesenermaßen jedenfalls theoretisch einem Angriff mit Quantencomputern standhalten, gibt es einen entsprechenden Beweis für PQC-Verschlüsselungsverfahren nicht. Allerdings handelt es sich bei letzteren um Verschlüsselungsverfahren, welche auf sehr komplexen Algorithmen beruhen, für die - Stand jetzt - davon ausgegangen wird, dass auch sie einem Angriff mit Quantencomputern standhalten. Jedenfalls konnte bisher ein Gegenbeweis nicht erbracht werden.

Das heißt aber auch, dass bei einer Gestaltung des Verfahrens, bei welcher für den Austausch des als Basisschlüssel dienenden Shared Secret ein PQC-Verschlüsselungsverfahren zum Einsatz gelangt, der Basisbetrieb im Grunde das gleiche Maß an Sicherheit bietet wie ein unter Verwendung von quantenmechanisch erzeugten Schlüsseln ausgeführter Komfortbetrieb. Insoweit ist durch den Einsatz der Erfindung gewissermaßen doppelte Sicherheit gegeben, in deren Rahmen der Basisbetrieb im Grunde eine Art Sicherheitsredundanz darstellt. Gleichzeitig kann zum Beispiel eine Quantenschlüssel-Sicherheit auf der Anwenderebene unabhängig von der Providerebene (providerspezifischen Ebene) bereitgestellt werden, wobei der Anwender auch seinen eigenen Schlüssel einbringen könnte, der vom Provider nicht einsehbar wäre.

Im Falle des Einsatzes eines PQC-Verschlüsselungsverfahrens für die nach dem Public-Key-Verfahren erfolgende Übertragung des Basisschlüssels (Shared Secret) zwischen den Endpunkten ist das Verfahren vorzugsweise zudem so gestaltet, dass sich die Endpunkte vor dem Austausch des Shared Secret gegenseitig unter Anwendung eines PQC-Signaturverfahrens authentifizieren. Die Endpunkte können hierzu vor dem Austausch des Shared Secret beispielsweise eine beiderseits bekannte Nachricht austauschen, welche sie mittels ihrer eindeutigen, nach einem PQC-Signaturverfahren erzeugten Signatur versehen. In diesem Zusammenhang ist allerdings anzumerken, dass PQC-Verschlüsselungsverfahren in der Praxis regelmäßig in Kombination mit entsprechenden, der Authentifizierung dienenden PQC-Signaturverfahren zum Einsatz gelangen, so dass beide Ausgestaltungsformen - Austausch des Basisschlüssel durch PQC-Verschlüsselung und Authentifizierung durch PQ-Signierverfahren eigentlich zusammengehören.

Ein jeweiliger Zusatzschlüssel, also der zur bitweisen XOR-Verknüpfung mit dem Basisschlüssel verwendete Quantenschlüssel, kann entsprechend einer möglichen Ausgestaltungsform der Erfindung durch die beiden dafür entsprechend ausgebildeten Endpunkte (zum Beispiel Netzwerkknoten) gemeinsam durch Anwendung eines QKD-Verfahrens erzeugt werden. Es ist aber auch möglich, dass ein solcher Quantenschlüssel durch eine externe Quelle erzeugt und beiden Endpunkten zur Verfügung gestellt wird. Bei einer solchen Vorgehensweise kann das Bereitstellen des Komfortbetriebs als kostenpflichtige Zusatzoption beispielsweise durch Nachrüstung von QKD-Systemen in den beiden Endpunkten erfolgen. Grundsätzlich denkbar ist es aber auch, dass die Endpunkte bereits über entsprechende QKD-Systeme verfügen, welche nur im Falle einer Nutzung des Komfortbetriebs aktiv eingebunden werden.

Darüber hinaus ist aber auch eine Verfahrensgestaltung möglich, bei welcher die beiden Endpunkte des Kommunikationssystems untereinander nicht in einer QKD-Beziehung stehen, aber jeweils über mindestens zwei vollständig disjunkte Verbindungspfade mit zwei anderen, einen QKD-Verbund ausbildenden Endpunkten verbunden sind. In diesem Falle werden den untereinander nicht in einer QKD-Beziehung stehenden Endpunkte des Kommunikationssystems, die als Zusatzschlüssel zur Ausführung des erfindungsgemäßen Komfortbetriebs verwendbaren Quantenschlüssel nach einem speziellen Verfahren gewissermaßen als QKD as a Service (QaaS) zur Verfügung gestellt. Ein dafür geeignetes, sich insbesondere auf Netzwerkknoten in einem Netzwerk beziehendes Verfahren wird beispielsweise in der DE 10 2019 118 286 der Anmelderin beschrieben.

Hierbei wird der als Zusatzschlüssel dienende Quantenschlüssel den beiden Endpunkten des Kommunikationssystems durch den QKD-Verbund mittels eines Übertragungsverfahrens zur Verfügung gestellt, bei dem durch den QKD-Verbund mehrere, durch bitweise XOR-Verknüpfung vom QKD-Verbund erzeugter Quantenschlüssel gebildete Bitsequenzen an beide Endpunkte des Kommunikationssystems über je einen der disjunkten Verbindungspfade übertragen werden. Mindestens eine der vorgenannten, durch bitweise XOR-Verknüpfung von Quantenschlüsseln erzeugte Bitsequenz wird dabei unter Einbeziehung des an die Endpunkte des hier im Rahmen der Erfindung betrachteten Kommunikationssystems auszuliefernden Zusatzschlüssels gebildet. Die beiden Endpunkte können diesen Zusatzschlüssel aus dem über die beiden disjunkten Verbindungspfade bei ihnen eingehenden Bitsequenzen extrahieren, indem sie alle bei ihnen zur Übertragung dieses Zusatzschlüssels eingehenden Bitsequenzen miteinander XOR-verknüpfen.

Dieses Verfahren ermöglicht es in besonders vorteilhafter Weise, beiden Endpunkte des hier betrachteten Kommunikationssystems für die bitweise XOR-Verknüpfung mit dem Basisschlüssel als Zusatzschlüssel zu verwendende Quantenschlüssel zur Verfügung zu stellen, ohne dass die Endpunkte selbst in einer QKD-Beziehung untereinander stehen oder über sonstige Mittel zur Erzeugung von Quantenschlüsseln verfügen müssten. Insoweit eignet sich diese Variante besonders gut dazu, dem Kommunikationssystem den Komfortbetrieb gegebenenfalls als kostenpflichtige Zusatzoption zur Verfügung zu stellen. Sofern diese Zusatzoption genutzt wird ist dabei - vorausgesetzt, dass die Endpunkten des Kommunikationssystems jeweils über zwei disjunkte Wege mit ein und demselben QKD-Verbund verbunden sind - lediglich ein entsprechender Modus zu aktivieren, bei dem die QKD-Knoten des besagten QKD-Verbunds, welche gegebenenfalls auch Quantenschlüssel für andere Endpunkte anderer Systeme - oder, sofern es sich bei den Endpunkten um Netzwerkknoten eines Netzwerks handelt, für andere Netzwerkknoten des Netzwerks - bereitstellen, einen Teil der von ihnen erzeugten Quantenschlüssel an die Endpunkte des erfindungsgemäßen Kommunikationssystems übertragen.

Das beschriebene Verfahren kann in Systemen auf verschiedenen Layern des OSI-Schichtenmodells, zum Beispiel auf Layer 1 (physikalische Ebene), Layer 2 (Data Link Ebene) oder Layer 3 (IP Network Ebene) eingesetzt werden, um die entsprechenden Systeme quantensicher zu schützen.

Layer-1-Verschlüsseler verschlüsseln beispielsweis Lichtsignale die in Glasfasermedien in OTN-Systemen (OTN = Optical Transport Network) oder elektrische Signale die auf Kupfermedien in Kupferkabel Systemen transportiert werden. Die Verschlüsselung erfolgt in diesem Fall unabhängig von Protokollen oder Applikationen. Über die Layer-1-Verschlüsselung entsteht kein Protokolloverhead, so dass die volle Bandbreite der Medien genutzt werden kann.

Layer-2-Verschlüsseler erlauben eine gesicherte Übertragung von zum Beispiel Unicast-, Multicast- oder Broadcast-Daten, beispielsweise in Ethernet Systemen. Die Layer-2-Verschlüsselung ist komplett von sämtlichen Applikationen auf höheren Ebenen entkoppelt und liefert, durch einen geringen Overhead, deutliche Geschwindigkeitsvorteile gegenüber einer Layer-3-Verschlüsselung.

Layer-3-IP-Verschlüsseler erlauben eine Übertragung von Daten, die zum Beispiel über eine Virtuelle Private Netzwerk (VPN) Verbindung gesichert werden. Dies erlaubt gesicherte Netze, die gemeinsame IP-Adressräume gestatten und somit unterschiedliche Anwendungen ermöglichen, quantensicher zu schützen. Die Layer-3- Verschlüsselung erzeugt den größten Overhead und ist daher mit Geschwindigkeitseinbußen verbunden.

Ein die Aufgabe lösendes, zur Durchführung des erfindungsgemäßen Verfahrens geeignetes Kommunikationssystem besteht zunächst aus zwei Endpunkten und aus einer die beiden Endpunkte untereinander verbindenden Datenverbindung. Darüber hinaus ist das Kommunikationssystem wie folgt beschaffen:
a) Beide Endpunkte des Kommunikationssystems sind dazu ausgebildet, über die Datenverbindung ausgetauschte Nutzdaten verschlüsselt zu übertragen. Dafür verfügt jeder der beiden Endpunkte über einen Verschlüsseler, das heißt über eine Ver- und Entschlüsselungseinrichtung.
b) Beide Endpunkte des Kommunikationssystems verfügen über einen gemeinsamen Vorrat an Quantenschlüsseln. Die Schlüssel dieses Vorrats werden in jedem der beiden Endpunkte durch einen lokalen Schlüsselspeicher gehalten und mittels je eines lokalen Schlüsselmanagements (synonym auch Key Management) der Endpunkte verwaltet.
c) Mindestens ein erster der beiden Endpunkte ist zur Erzeugung von als Basisschlüssel zu verwendenden Zufallszahlen ausgebildet. Dieser erste Endpunkt verfügt zur Übertragung von ihm erzeugter Basisschlüssel an den anderen, das heißt an den zweiten Endpunkt des Kommunikationssystems, über einen öffentlichen Schlüssel dieses zweiten Endpunktes, mit dessen Hilfe er die Basisschlüssel unter Nutzung eines Public-Key-Verfahrens an den zweiten Endpunkt überträgt. Der zweite Endpunkt verfügt seinerseits über einen mit dem von dem ersten Endpunkt verwendeten öffentlichen Schlüssel korrespondierenden geheimen Schlüssel zur Entschlüsselung der an ihn übertragenen den Basisschlüssel enthaltenden Bitsequenz (Zufallszahl).

Erfindungsgemäß ist das Kommunikationssystem in einem Basisbetrieb und in einem Komfortbetrieb, nämlich in einem Betrieb mit in Bezug auf die Verschlüsselung der zwischen den beiden Endpunkten ausgetauschten Nutzdaten erhöhter Sicherheit, betreibbar. In dem Basisbetrieb des Kommunikationssystems verschlüsseln dessen Endpunkte die zwischen ihnen ausgetauschten Nutzdaten jeweils mit einer durch den ersten Endpunkt erzeugten, als Basisschlüssel dienenden Zufallszahl symmetrisch. Die jeweilige Zufallszahl, also der jeweilige Basisschlüssel, wird als Shared Secret von dem ersten, sie erzeugenden Endpunkt unter Verwendung eines von den Endpunkten ausführbaren PQC-Verschlüsselungsverfahrens, verschlüsselt mit dem öffentlichen Schlüssel des zweiten Endpunkts, an den zweiten Endpunkt übertragen, welcher seinerseits diese Zufallszahl aus der von ihm empfangenen Sequenz mittels seines privaten Schlüssels extrahiert.

In dem Komfortbetrieb verschlüsseln die Endpunkte des Kommunikationssystems die zwischen ihnen ausgetauschten Nutzdaten mittels eines Schlüssels, welchen sie durch bitweise XOR-Verknüpfung des zwischen ihnen ausgetauschten Basisschlüssels mit einem identisch in beiden Endpunkten dazu verwendeten, aus ihrem gemeinsamen Vorrat entnommenen Quantenschlüssel (Zusatzschlüssel) erzeugen.

Bei dem erfindungsgemäßen Kommunikationssystem sind zur Realisierung der beiden zuvor beschriebenen Betriebsmodi die Verschlüsseler beider Endpunkte jeweils mit einem PQC-Server zur Ausführung des bereits erwähnten PQC-Verschlüsselungsverfahrens sowie mit einer Einheit zur bitweisen XOR-Verknüpfung von Bitsequenzen bei der Ausführung des Komfortbetriebs ausgestattet.

Wie bereits eingangs und zum Verfahren ausgeführt, handelt es sich bei einer möglichen Ausbildungsform des erfindungsgemäßen Kommunikationssystems und im Hinblick auf einen bevorzugten Anwendungsfall der Erfindung um ein Kommunikationssystem, dessen Endpunkte durch zwei Netzwerkknoten ausgebildet sind, wobei dieses Kommunikationssystem gegebenenfalls auch Teil eines umfassenderen, eine Vielzahl von Netzwerkknoten aufweisenden Netzwerks sein kann. Bei den Netzwerkknoten des Kommunikationssystems kann es sich in diesem Anwendungskontext sowohl um zwei Netzwerkknoten eines lokalen Netzes als auch um zwei in jeweils unterschiedlichen lokalen Netzen, wie beispielsweise in zwei Metro-Netzen, oder gar in zwei kontinentalen, über eine interkontinentale Datenverbindung miteinander verbunden Netzen - gewissermaßen als Übergangsknoten - angeordnete Netzwerkknoten handeln.

Eine bevorzugte Weiterbildung des zuvor beschriebenen Kommunikationssystems ist dadurch gegeben, dass beide Endpunkte des Kommunikationssystems über ein QKD-System verfügen. Hierbei stehen die Endpunkte unter Nutzung dieses QKD-Systems untereinander in einer QKD-Beziehung zur Erzeugung der als Zusatzschlüssel dienenden Quantenschlüssel, wobei deren Erzeugung nach einem QKD-Verfahren, das heißt nach einem Verfahren der Quantum Key Distribution, erfolgt. Die Endpunkte des Kommunikationssystems können demnach bei dieser Ausbildungsform vorteilhafterweise die zur bitweisen XOR-Verknüpfung mit einem jeweiligen Basisschlüssel dienenden quantensicheren Zusatzschlüssel (Quantenschlüssel) selbst erzeugen.

Das erfindungsgemäße Kommunikationssystem kann außerdem vorteilhaft dadurch weitergebildet sein, dass dessen erster Endpunkt zur Erzeugung der als Basisschlüssel zu verwendenden Zufallszahlen über einen Quantum Random Number Generator QRNG verfügt.

Für die vorgestellte Erfindung lassen sich folgende Vorteile angeben:
Der wesentlichste Vorteil der Erfindung liegt in der Eliminierung einer Schwachstelle (mögliche Nutzung von Basisschlüssel ohne Quantensicherheit) in der Implementierung von Verschlüsselungsprotokollen bei marktüblichen Verschlüsselern. Die vorgestellte Lösung ist insbesondere anwendbar auf alle Verschlüsseler, die auf den OSI Layer 1, Layer 2 oder Layer 3 operieren.

Insbesondere durch die Implementierung einer bevorzugten Ausbildungsform der erfindungsgemäßen Lösung, mit dem Austausch eines selbst quantensicheren Basisschlüssels unter Verwendung der Post Quantum Kryptographie (PQC), wird die Sicherheit von Layer-1-, Layer-2- oder Layer-3-Übertragungssystemen deutlich erhöht. Zusammen liefern die QKD- und PQC-Systeme eine erhöhte Sicherheit, wobei auch beim vorübergehenden Ausfall eines der beiden Systeme eine quantensichere Kommunikation für das Gesamtsystem gewährleistet wird. Die vorgestellte Lösung kann dabei in QKD-Architekturen transparent und minimal invasiv integriert werden.

Zudem sind folgende Sicherheitsbetrachtungen als relevant anzusehen:
Die Sicherheit der vorgestellten Erfindung hängt direkt von der Sicherheit der verwendeten kryptografischen Verfahren ab. Die theoretische Sicherheit des Quantenschlüsselaustausches ist bewiesen und hängt maßgeblich von der Gültigkeit der Gesetze der Quantenmechanik ab, während die praktische Sicherheit abhängig von der technischen Implementierung eines jeweiligen QKD-Systems und den Möglichkeiten technischer Side Channels ist.

Die PQC-Kryptosysteme werden zurzeit entwickelt, überprüft und unterliegen aufwändigen Standardisierungsbemühungen. Obwohl es keinen Beweis ihrer absoluten Sicherheit gibt, gelten die Algorithmen aufgrund geltender Annahmen und Kenntnisse über Algorithmen eines Quantencomputers als sicher.

Die Anwendung von "Post Quantum" Verschlüsselung (PQC) und Authentifizierung zusätzlich zu quantensicheren Schlüsseln, die über Verfahren des Quantenschlüssel-Austausches (QKD) erzeugt werden, liefert zusammen ein Verfahren mit erhöhter Sicherheit. Sollte ein Verfahren ausfallen, fehlerhaft sein oder angegriffen werden, so schützt das zweite Verfahren weiterhin die Vertraulichkeit der quantensicheren Kommunikation.

Die beiden Verfahren, "Post Quantum" Kryptographie (PQC) und Quantenschlüsselaustausch (QKD) können als komplementäre technische Ansätze implementiert werden. Während QKD auf einem hardwarezentrierten Ansatz unter Ausnutzung von quantenmechanischen Effekten beruht, nutzt die PQC einen softwarezentrierten Ansatz zur Implementierung härterer mathematischer Probleme als Basis neuer kryptographischer Protokolle.

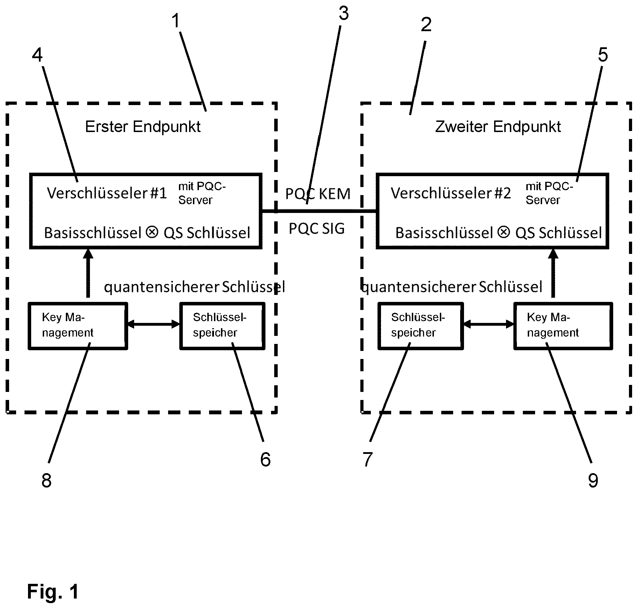

Nachfolgend soll anhand der Fig. 1 ein Ausführungsbeispiel für die Erfindung gegeben und erläutert werden. Das Ausführungsbeispiel bezieht sich auf ein Kommunikationssystem, bei dessen durch die Datenverbindung miteinander verbundenen Endpunkten es sich um Netzwerkknoten innerhalb eines Netzwerks handelt. Auf die Darstellung der Verbindungen/Konnektivitäten dieser beiden Netzwerkknoten zu anderen Netzwerkknoten des Netzwerks wurde dabei verzichtet.

Die Fig. 1 zeigt eine grobschematische Darstellung des durch zwei Netzwerkknoten (erster Endpunkt 1 und zweiter Endpunkt 2) und eine diese untereinander verbindende Datenverbindung 3 ausgebildeten Kommunikationssystems. Beide Netzwerkknoten (Endpunkte 1, 2) weisen jeweils einen Verschlüsseler 4, 5 auf, das heißt eine Ver- und Entschlüsselungseinrichtung für einen über die Datenverbindung zwischen den Netzwerkknoten (Endpunkten 1, 2) erfolgenden verschlüsselten Datenverkehr. Erfindungsgemäß sind den Verschlüsselern 4, 5 beider Netzwerkknoten (Endpunkte 1, 2) jeweils ein PQC-Server, ein lokaler Schlüsselspeicher 6, 7 zur Aufnahme gemeinsamer, das heißt in beiden Netzwerkknoten (Endpunkten 1, 2) identisch vorliegender Quantenschlüssel, und ein lokales Schlüsselmanagement 8, 9 zur Verwaltung der vorgenannten Quantenschlüssel zugeordnet oder wahlweise auch als integraler Bestandteil des jeweiligen Verschlüsselers 4, 5 ausgebildet.

In einem Komfortbetrieb, bei dem es sich insbesondere bei einem als Teil eines Kernnetzes ausgebildeten Kommunikationssystems auch um einen Regelbetrieb handeln kann, verschlüsseln die Netzwerkknoten (Endpunkten 1, 2) die zwischen ihnen übertragenen Nutzdaten mittels eines Schlüssels, der durch eine bitweise XOR-Verknüpfung eines zuvor mittels eines PQC-Verschlüsselungsverfahrens zwischen ihnen ausgetauschten Basisschlüssels mit einem (in beiden Netzwercknoten, das heißt Endpunkten 1, 2, identisch verwendeten) Quantenschlüssel des gemeinsamen Vorrats beider Netzwerkknoten erzeugt wird.

Solange die Systeme zur Erzeugung von durch die beiden Netzwerkknoten (Endpunkte 1, 2) als gemeinsame Schlüssel zu verwendenden Quantenschlüsseln einwandfrei, das heißt ohne technische Störung oder Detektion eines möglichen Angriffs, arbeiten und in beiden Netzwerkknoten genügend Quantenschlüssel zur Verfügung stehen, arbeitet das Kommunikationssystem in diesem Komfortbetrieb oder Regelbetrieb. Tritt jedoch eine irgendwie geartete Störung der die Quantenschlüssel erzeugenden Systeme auf, so fällt das Kommunikationssystem unmittelbar in den Basisbetrieb zurück. Hierbei wird zur Verschlüsselung der zwischen den Netzwerkknoten (Endpunkten 1, 2) ausgetauschten Daten ausschließlich der jeweils gültige Basisschlüssel verwendet. Letzterer wird durch die beiden Netzwerkknoten (Endpunkte 1, 2) jeweils zuvor nach einem Public-Key-Verfahren, jedoch vorliegend nach einem besonders sicheren Verfahren, nämlich nach einem PQC-Verschlüsselungsverfahren, ausgetauscht. Der Austausch vollzieht sich hierbei wie folgt.

Der erste Netzwerkknoten (Endpunkt 1) möchte mit dem zweiten Netzwerkknoten (Endpunkt 2) Nutzdaten auf einem der Layer 1, 2 oder 3 des OSI-Schichtenmodels austauschen. Hierzu identifizieren sich die beiden Netzwerkknoten, das heißt deren Systeme, zunächst untereinander durch den Einsatz eines PQC-Signaturverfahrens. Nach erfolgreicher Authentifizierung verschlüsselt der erste Netzwerkknoten (Endpunkt 1) eine bei ihm erzeugte Zufallszahl mit dem früher erhaltenen öffentlichen Schlüssel des zweiten Netzwerkknotens (Endpunkt 2) und überträgt die entstehende Bitsequenz über die Datenverbindung 3 an den zweiten Netzwerkknoten (Endpunkt 2). Der zweite Netzwerkknoten (Endpunkt 2) extrahiert aus der von ihm empfangenen Bitsequenz mittels seines privaten Schlüssels die durch den ersten Netzwerkknoten (Endpunkt 1) erzeugte, als Shared Secret übertragene Zufallszahl. Beide Netzwerkknoten, das heißt Endpunkte 1, 2, verfügen nun über dieselbe geheime Zufallszahl, welche sie als Basisschlüssel verwenden. Befindet sich das Kommunikationssystem aufgrund einer Störung bei der Erzeugung der Quantenschlüssel im Basisbetrieb, so wird der wie vorstehend übertragene Basisschlüssel zur symmetrischen Verschlüsselung der zu übertragenden Nutzdaten verwendet.

Andernfalls - das Kommunikationssystem arbeitet im Komfortbetrieb - wird dieser Basisschlüssel mittels eines Quantenschlüssels aus dem gemeinsamen Vorrat beider Netzwerkknoten (Endpunkte 1, 2) bitweise XOR-verknüpft und die hierbei entstehende Bitsequenz zur symmetrischen Verschlüsselung zwischen den Netzwerkknoten (Endpunkten 1, 2) zu übertragender Nutzdaten verwendet. Vorzugsweise zusammen mit dem Basisschlüssel überträgt dazu der erste Netzwerkknoten (der erste Endpunkt 1) einen Identifier desjenigen Quantenschlüssels aus dem gemeinsamen Vorrat, den er zur bitweisen XOR-Verknüpfung des Basisschlüssels verwenden will, an den zweiten Netzwerkknoten (an den zweiten Endpunkt 2). Mit Hilfe des mit übertragenen Identifiers sucht der zweite Netzwerkknoten (Endpunkt 2), gesteuert durch sein lokales Schlüsselmanagement 9, den mit diesem bezeichneten, bei ihm ebenfalls vorliegenden Quantenschlüssel aus dem lokalen Schlüsselspeicher 7 heraus und verknüpft diesen seinerseits mittels des Verschlüsselers 5 bitweise XOR mit dem zuvor von ihm aus den vom ersten Netzwerkknoten empfangenen Daten extrahierten Basisschlüssel.

Die zuvor angesprochenen Verfahren zur PQC-Verschlüsselung beziehungsweise zur Authentifizierung (PQC-Signaturverfahren) sind als solches bereits bekannt und, wenngleich möglicherweise bisher nur in theoretischen Abhandlungen veröffentlicht, als Stand der Technik anzusehen. Sie sind insoweit nicht Teil der hier vorliegenden Erfindung und sollen daher auch nicht näher erläutert werden. Daher soll nachfolgend lediglich eine Übersicht zu den insoweit bekannten Verfahren gegeben werden.

### Verfügbare Post Quantum Verschlüsselungsverfahren

'BIKE1-L1-CPA', 'BIKE1-L3-CPA', 'BIKE1-L1-FO', 'BIKE1-L3-FO', 'Kyber512', 'Kyber768', 'Kyber1024', 'Kyber512-90s', 'Kyber768-90s', 'Kyber1024-90s', 'LEDAcryptKEM-LT12', 'LEDAcryptKEM-LT32', 'LEDAcryptKEM-LT52', 'NewHope-512-CCA', 'NewHope-1024-CCA', 'NTRU-HPS-2048-509', 'NTRU-HPS-2048-677', 'NTRU-HPS-4096-821', 'NTRU-HRSS-701', 'LightSaber-KEM', 'Saber-KEM', 'FireSaber-KEM', 'BabyBear', 'BabyBearEphem', 'MamaBear', 'MamaBearEphem', 'PapaBear', 'PapaBearEphem', ,FrodoKEM-640-AES', 'FrodoKEM-640-SHAKE', 'FrodoKEM-976-AES', 'FrodoKEM-976-SHAKE', 'FrodoKEM-1344-AES', 'FrodoKEM-1344-SHAKE', 'SIDH-p434', 'SIDH-p503', 'SIDH-p610', SIDH-p751', 'SIDH-p434-compressed', 'SIDH-p503-compressed', 'SIDH-p610-compressed', 'SIDH-p751-compressed', 'SIKE-p434', 'SIKE-p503', 'SIKE-p610', 'SIKE-p751', 'SIKE-p434-compressed', 'SIKE-p503-compressed', 'SIKE-p610-compressed', 'SIKE-p751 -compressed'.

### Verfügbare Post Quantum Signaturverfahren:

'DILlTHIUM_2', 'DILITHIUM_3', 'DILITHIUM_4', 'MQDSS-31-48', MQDSS-31-64', SPHINCS+-Haraka-128f-robust', SPHINCS+-Haraka-128f-simple', 'SPHINCS+-Haraka-128s-robust', 'SPHINCS+-Haraka-128s-simple', 'SPHINCS+-Haraka-192f-robust', 'SPHINCS+-Haraka-192f-simple', 'SPHINCS+-Haraka-192s-robust', 'SPHINCS+-Haraka-192s-simple', 'SPHINCS+-Haraka-256f-robust', 'SPHINCS+-Haraka-256f-simple', 'SPHINCS+-Haraka-256s-robust', 'SPHINCS+-Haraka-256s-simple', 'SPHINCS+-SHA256-128f-robust', ,SPHINCS+-SHA256-128f-simp-le', 'SPHINCS+-SHA256-128s-robust', 'SPHINCS+-SHA256-128s-simple', 'SPHINCS+-SHA256-192f-robust', 'SPHINCS+-SHA256-192f-simple', 'SPHINCS+-SHA256-192s-robust', 'SPHINCS+-SHA256-192s-simple', 'SPHINCS+-SHA256-256f-robust', 'SPHINCS+-SHA256-256f-simple', 'SPHINCS+-SHA256-256s-robust', 'SPHINCS+-SHA256-256s-simple', 'SPHINCS+-SHAKE256-128f-robust', 'SPHINCS+-SHAKE256-128f-simple', 'SPHINCS+-SHAKE256-128s-robust', 'SPHINCS+-SHAKE256-128s-simple', 'SPHINCS+-SHAKE256-192f-robust', 'SPHINCS+-SHAKE256-192f-simple', 'SPHINCS+-SHAKE256-192s-robust', 'SPHINCS+-SHAKE256-192s-simple', 'SPHINCS+-SHAKE256-256f-robust', 'SPHINCS+-SHAKE256-256f-simple', 'SPHINCS+-SHAKE256-256s-robust', 'SPHINCS+-SHAKE256-256s-simple',m 'picnic L1_FS', 'picnic_L1_UR', 'picnic_L3_FS', 'picnic_L3_UR', 'picnic_L5_FS', 'picnic_L5_UR', 'picnic2_L1_FS', 'picnic2_L3_FS', 'picnic2_L5_FS', 'qTesla-p-I', 'qTesla-p-III'

### Standardisierung der Systeme und Schnittstellen zum Quantenschlüsselaustausch

Das hier vorgestellte Verfahren nutzt die Standards und Verfahren, die in den jeweiligen nationalen und internationalen Standardisierungsgremien erarbeitet werden. Diese sind:
- National Standardization (NIST, IEEE)
- European Standardization (ETSI ISG QKD, ETSI TC Cyber WG QSC)
- Internationale Standardization (ISO /IEC, ITU, Quantum Internet Proposed Research Groupd, Crypto Forum Focus Group)

Die Integration von QKD-Netzen, insbesondere Metro-Netzen, mit PQC Netzwerkbrücken über 5G, Fiber oder Satellitenverbindungen über klassische Satelliten wird in diesen Gremien (noch) nicht diskutiert.

### Technische Realisierung

- QKD-Systeme werden bereits auf dem Markt durch mehrere Firmen angeboten.
- Verschlüsseler werden passend zu den QKD-Systemen angeboten.
- Key Store Systeme, das heißt Schlüsselspeicher werden ebenfalls bereits von mehreren Firmen angeboten.
- Key Management Systeme (Systeme für das Schlüsselmanagement) werden von den QKD-Anbietern passend zu ihren Systemen angeboten. Ein anbieterunabhängiges, providerspezifisches Schlüsselmanagement ist abhängig von den laufenden Standardisierungsbemühungen und zurzeit noch nicht erhältlich.
- PQC-Signatur- und Verschlüsselungsalgorithmen sind in Form von "open source Bibliotheken" verfügbar. Diese Bibliotheken bedürfen einer Adaption und eine Neukompilation von openssl, der zurzeit gängigsten Krypto-Bibliothek. Die Verfahren haben einen Stand, der es ermöglicht, dass die angewandte Forschung und Entwicklung sie benutzen kann - eine Marktreife liegt noch nicht vor.
- AES 256 zur quantensicheren Verschlüsselung von Nutzdaten, ist standardisiert und Teil gängiger Programmierumgebungen.
- PQ-PKI (Public Key Infrastrukturen) zum Enrollment und zur Verifikation von hybriden PQ-Zertifikaten liegen als Test Implementierungen und Internetservices vor.

### Verwendete Abkürzungen:

- AES: Advanced Encryption Standard
- KEM: Key Encapsulation Mechanism
- OSI: Open Systems Interconnection
- OTN: Optical Transport Network
- PKI: Public Key Infrastructure
- PQ: Post Quantum
- PQC: Post Quantum Cryptography
- QKD: Quantum Key Distribution
- QRNG: Quantum Ranfom Number Generator
- RSA: Rivest-Shamir-Adleman Algorithmus
- SIG: Signature
- SSL: Secure Sockets Layer

## Patentansprüche

1. Verfahren zum Betrieb eines aus zwei Endpunkten (1, 2) und aus einer Datenverbindung (3) zwischen diesen Endpunkten (1, 2) bestehenden Kommunikationssystems, bei welchem zwischen dem ersten Endpunkt (1) und dem zweiten Endpunkt (2) des Kommunikationssystems ausgetauschte Nutzdaten symmetrisch verschlüsselt werden mittels eines in beiden Endpunkten (1, 2) vorhandenen Schlüssels, der auf einer in dem ersten Endpunkt (1) erzeugten, nach dem Public-Key-Prinzip als Shared Secret an den zweiten Endpunkt (2) übertragenen Zufallszahl basiert, **dadurch gekennzeichnet, dass** in einem Basisbetrieb des Kommunikationssystems unmittelbar die zwischen den Endpunkten(1, 2) nach dem Public-Key-Verfahren ausgetauschte, einen Basisschlüssel darstellende Zufallszahl zur symmetrischen Verschlüsselung der Nutzdaten verwendet wird, wohingegen in einem Komfortbetrieb, nämlich in einem Betrieb mit in Bezug auf die Verschlüsselung der Nutzdaten erhöhter Sicherheit, die symmetrische Verschlüsselung der Nutzdaten erfolgt mittels eines Schlüssels, der gebildet wird durch eine bitweise XOR-Verknüpfung des Basisschlüssels mit einem in beiden Endpunkten (1, 2) vorliegenden Zusatzschlüssel, bei welchem es sich um einen Quantenschlüssel, das heißt um einen nach einem quantensicheren Verfahren erzeugten Schlüssel, handelt, wobei das Kommunikationssystem im Falle seiner Nutzung im Komfortbetrieb und einer dabei auftretenden Störung automatisiert in den Basisbetrieb zurückfällt.

2. Verfahren nach Anspruch 1, **dadurch gekennzeichnet, dass** dieses in einem Kommunikationssystem verwendet wird, in welchem es sich bei den durch die Datenverbindung miteinander verbundenen Endpunkten (1 2) um zwei Netzwerkknoten in einem Netzwerk handelt.

3. Verfahren nach Anspruch 1 oder 2, **dadurch gekennzeichnet, dass** es sich bei dem für die bitweise XOR-Verknüpfung mit dem Basisschlüssel verwendeten Zusatzschlüssel um einen von mehreren, in beiden Endpunkten (1, 2) vorliegenden Quantenschlüsseln handelt, wobei im Komfortbetrieb zwischen den beiden Endpunkten (1, 2) , vorzugsweise zusammen mit dem unter Anwendung des Public-Key-Verfahrens übertragenen Shared Secret, ein den zur bitweisen XOR-Verknüpfung zu verwendenden Quantenschlüssel eindeutig bezeichnender Identifier übertragen wird.

4. Verfahren nach einem der Ansprüche 1 bis 3, **dadurch gekennzeichnet, dass** der erste Endpunkt (1) die als Shared Secret an den zweiten Endpunkt (2) übertragene, den Basisschlüssel bildende Zufallszahl mittels eines Quantum Random Number Generators QRNG erzeugt.

5. Verfahren nach einem der Ansprüche 1 bis 4, **dadurch gekennzeichnet, dass** als Public-Key-Verfahren zur Übertragung der als Shared Secret übertragenen, den Basisschlüssel ausbildenden Zufallszahl ein PQC-Verschlüsselungsverfahren verwendet wird.

6. Verfahren nach Anspruch 5, **dadurch gekennzeichnet, dass** sich die beiden Endpunkte (1, 2) des Kommunikationssystems vor der unter Anwendung des PQC-Verschlüsselungsverfahrens erfolgenden Übertragung des Shared Secret gegenseitig unter Anwendung eines PQC-Signaturverfahrens authentifizieren.

7. Verfahren nach einem der Ansprüche 1 bis 6, **dadurch gekennzeichnet, dass** der als Zusatzschlüssel dienende, zur bitweisen XOR-Verknüpfung mit dem Basisschlüssel verwendete Quantenschlüssel, durch die beiden dafür entsprechend ausgebildeten Endpunkte (1, 2) gemeinsam durch Anwendung eines QKD-Verfahrens erzeugt wird.

8. Verfahren nach einem der Ansprüche 1 bis 6, wobei die beiden Endpunkte (1, 2) des Kommunikationssystems untereinander nicht in einer QKD-Beziehung stehen, aber jeweils über mindestens zwei vollständig disjunkte Verbindungspfade mit zwei anderen, einen QKD-Verbund ausbildenden Endpunkten verbunden sind, **dadurch gekennzeichnet, dass** der als Zusatzschlüssel dienende Quantenschlüssel den beiden Endpunkten (1, 2) des Kommunikationssystems durch den QKD-Verbund mittels eines Übertragungsverfahrens zur Verfügung gestellt wird, bei dem durch den QKD-Verbund mehrere durch bitweise XOR-Verknüpfung von dem QKD-Verbund erzeugter Quantenschlüssel gebildete Bitsequenzen, von denen mindestens eine unter Einbeziehung des Zusatzschlüssels gebildet ist, an beide Endpunkte (1, 2) des Kommunikationssystems über je einen der disjunkten Verbindungspfade übertragen werden und die Endpunkte des Kommunikationsnetzes den von ihnen als Zusatzschlüssel zur bitweisen XOR-Verknüpfung mit dem Basisschlüssel zu verwendenden Quantenschlüssel durch bitweise XOR-Verknüpfung der bei ihnen von dem QKD-Verbund eingehenden Bitsequenzen extrahieren.

9. Kommunikationssystem, bestehend aus zwei Endpunkten (1, 2) aus einer die beiden Endpunkte (1, 2) untereinander verbindenden Datenverbindung (3), wobei
- beide Endpunkte (1, 2) dazu ausgebildet sind, über die Datenverbindung (3) ausgetauschte Nutzdaten verschlüsselt zu übertragen, wofür jeder der Endpunkte (1, 2) über einen Verschlüsseler (4, 5), das heißt über eine Ver- und Entschlüsselungseinrichtung, verfügt und
- beide Endpunkte (1, 2) über einen gemeinsamen Vorrat an Quantenschlüsseln verfügen, dessen Schlüssel jeder der beiden Endpunkte (1, 2) in einem lokalen Schlüsselspeicher (6, 7) hält und mittels eines lokalen Schlüsselmanagements (8, 9) verwaltet, und
- mindestens ein erster Endpunkt (1) der beiden Endpunkte (1) zur Erzeugung von als Basisschlüssel zu verwendenden Zufallszahlen ausgebildet ist und zur Übertragung dieser Basisschlüssel an den zweiten Endpunkt (2), nach dem Public-Key-Prinzip, über einen öffentlichen Schlüssel des zweiten Endpunkts (2) verfügt, zu welchem ein mit diesem öffentlichen Schlüssel korrespondierender geheimer Schlüssel existiert, der sich im Besitz des zweiten Endpunkts (2) befindet,
**dadurch gekennzeichnet, dass**
a.) die Verschlüsseler (4, 5) beider Endpunkte (1, 2) jeweils mit einem PQC-Server zur Ausführung eines PQC-Verschlüsselungsverfahrens sowie mit einer Einheit zur bittweisen XOR-Verknüpfung von Bitsequenzen ausgestattet sind,
b.) das Kommunikationssystem in einem Basisbetrieb und in einem Komfortbetrieb betreibbar ist und die zwischen den Endpunkten (1, 2) ausgetauschten Nutzdaten in beiden Betriebsmodi jeweils unter Verwendung eines Basisschlüssels symmetrisch verschlüsselt werden, der zwischen den Endpunkten (1, 2) nach einem durch ihre PQC-Server ausgeführten PQC-Verschlüsselungsverfahren ausgetauscht wird, wobei zur Verschlüsselung der Nutzdaten im Basisbetrieb unmittelbar der Basisschlüssel und im Komfortbetrieb ein Schlüssel verwendet wird, welcher durch die Endpunkte (1, 2) mittels ihrer jeweiligen, dafür vorgesehenen Einheit durch bitweise XOR-Verknüpfung des Basisschlüssels mit einem identischen, aus ihrem gemeinsamen Vorrat entnommenen Quantenschlüssel erzeugt wird,
c.) das Kommunikationssystem im Falle seiner Nutzung im Komfortbetrieb und einer dabei auftretenden Störung automatisiert in den Basisbetrieb zurückfällt.

10. Kommunikationssystem nach Anspruch 9, **dadurch gekennzeichnet, dass** es sich bei dessen, durch die Datenverbindung (3) miteinander verbundenen Endpunkten (1, 2) um zwei Netzwerkknoten in einem Netzwerk handelt.

11. Kommunikationssystem nach Anspruch 9 oder 10, **dadurch gekennzeichnet, dass** beide Endpunkte (1, 2) des Kommunikationssystems über ein QKD-System verfügen und untereinander in einer QKD-Beziehung zur Erzeugung der als Zusatzschlüssel dienenden Quantenschlüssel nach einem QKD-Verfahren, das heißt nach einem Verfahren der Quantum Key Distribution, stehen.

12. Kommunikationssystem nach einem der Ansprüche 9 bis 11, **dadurch gekennzeichnet, dass** dessen erster Endpunkt (1) zur Erzeugung der als Basisschlüssel zu verwendenden Zufallszahlen über einen Quantum Random Number Generator QRNG verfügt.

## Claims

1. Method for operating a communication system, consisting of two endpoints (1, 2) and a data connection (3) between these endpoints (1, 2), in which payload data interchanged between the first endpoint (1) and the second endpoint (2) of the communication system are symmetrically encrypted by means of a key that is present in both endpoints (1, 2) and that is based on a random number generated in the first endpoint (1) and transmitted to the second endpoint (2) as a shared secret using the public key principle, **characterized in that** in a basic mode of the communication system the random number interchanged between the endpoints (1, 2) using the public key method, which random number represents a basic key, is used directly to symmetrically encrypt the payload data, whereas in a comfort mode, specifically in a mode with increased security for the encryption of the payload data, the symmetrical encryption of the payload data is carried out by means of a key that is formed by way of a bit-by-bit XORing of the basic key with an additional key, which is present in both endpoints (1, 2) and is a quantum key, that is to say a key generated using a quantum-safe method, wherein the communication system, in the event of its being used in the comfort mode and a fault occurring, reverts to the basic mode in automated fashion.

2. Method according to Claim 1, **characterized in that** it is used in a communication system in which the endpoints (1, 2) connected to one another by the data connection are two network nodes in a network.

3. Method according to Claim 1 or 2, **characterized in that** the additional key used for the bit-by-bit XORing with the basic key is one of multiple quantum keys present in both endpoints (1, 2), wherein in the comfort mode an identifier that explicitly denotes the quantum key to be used for the bit-by-bit XORing is transmitted between the two endpoints (1, 2), preferably together with the shared secret transmitted using the public key method.

4. Method according to one of Claims 1 to 3, **characterized in that** the first endpoint (1) generates the random number transmitted to the second endpoint (2) as a shared secret, and forming the basic key, by means of a quantum random number generator QRNG.

5. Method according to one of Claims 1 to 4, **characterized in that** the public key method used for transmitting the random number transmitted as a shared secret, and forming the basic key, is a PQC encryption method.

6. Method according to Claim 5, **characterized in that** the two endpoints (1, 2) of the communication system authenticate themselves to one another using a PQC signature method before the shared secret is transmitted using the PQC encryption method.

7. Method according to one of Claims 1 to 6, **characterized in that** the quantum key used as the additional key, and used for the bit-by-bit XORing with the basic key, is generated by the two endpoints (1, 2), which are of appropriate design for that purpose, together using a QKD method.

8. Method according to one of Claims 1 to 6, wherein the two endpoints (1, 2) of the communication system are not in a QKD relationship with one another, but are each connected to two other endpoints, which form a QKD group, via at least two completely disjunct connecting paths, **characterized in that** the quantum key used as the additional key is made available to the two endpoints (1, 2) of the communication system by the QKD group by means of a transmission method in which the QKD group transmits multiple bit sequences formed by way of bit-by-bit XORing of quantum keys generated by the QKD group, at least one of which bit sequences is formed with the involvement of the additional key, to the two endpoints (1, 2) of the communication system via one of the disjunct connecting paths each, and the endpoints of the communication network extract the quantum key to be used by them as the additional key for the bit-by-bit XORing with the basic key by way of bit-by-bit XORing of the bit sequences arriving at them from the QKD group.

9. Communication system, consisting of two endpoints (1, 2) and a data connection (3) connecting the two endpoints (1, 2) to one another, wherein
- both endpoints (1, 2) are designed to transmit payload data interchanged via the data connection (3) in encrypted form, for which purpose each of the endpoints (1, 2) has an encryptor (4, 5), that is to say has an encryption and decryption device, and
- both endpoints (1, 2) have a joint stock of quantum keys, the keys of which each of the two endpoints (1, 2) holds in a local key memory (6, 7) and manages by means of a local key management (8, 9), and
- at least one first endpoint (1) of the two endpoints (1) is designed to generate random numbers to be used as basic keys and, in order to transmit these basic keys to the second endpoint (2), using the public key principle, has a public key of the second endpoint (2), for which a secret key corresponding to this public key exists that is in the possession of the second endpoint (2),
**characterized in that**
a.) the encryptors (4, 5) of both endpoints (1, 2) are each equipped with a PQC server for carrying out a PQC encryption method and with a unit for the bit-by-bit XORing of bit sequences,
b.) the communication system can be operated in a basic mode and in a comfort mode, and in each of the two operating modes the payload data interchanged between the endpoints (1, 2) are symmetrically encrypted using a basic key that is interchanged between the endpoints (1, 2) using a PQC encryption method carried out by their PQC servers, wherein encrypting the payload data in the basic mode involves using the basic key directly and in the comfort mode involves using a key that is generated by the endpoints (1, 2) by means of their respective unit provided for that purpose by way of bit-by-bit XORing of the basic key with an identical quantum key taken from their joint stock,
c.) the communication system reverts to the basic mode in automated fashion in the event of its being used in the comfort mode and a fault occurring.

10. Communication system according to Claim 9, **characterized in that** the endpoints (1, 2) thereof that are connected to one another by the data connection (3) are two network nodes in a network.

11. Communication system according to Claim 9 or 10, **characterized in that** the two endpoints (1, 2) of the communication system have a QKD system and are in a QKD relationship with one another for the purpose of generating the quantum keys used as additional keys using a QKD method, that is to say using a quantum key distribution method.

12. Communication system according to one of Claims 9 to 11, **characterized in that** the first endpoint (1) thereof has a quantum random number generator QRNG in order to generate the random numbers to be used as basic keys.

## Revendications

1. Procédé permettant de faire fonctionner un système de communication composé de deux points terminaux (1, 2) et d'une liaison de données (3) entre ces points terminaux (1, 2), dans lequel des données utiles échangées entre le premier point terminal (1) et le deuxième point terminal (2) du système de communication sont cryptées de manière symétrique au moyen d'une clé présente dans les deux points terminaux (1, 2) et qui est basée sur un nombre aléatoire généré dans le premier point terminal (1) et transmis comme un secret partagé au deuxième point terminal (2) selon le principe de clé publique,
**caractérisé en ce que** dans un mode de base du système de communication, le nombre aléatoire échangé entre les points terminaux (1, 2) selon le procédé de clé publique et représentant une clé de base est immédiatement utilisé pour le cryptage symétrique des données utiles, alors que dans un mode confort, notamment dans un fonctionnement à sécurité accrue concernant le cryptage des données utiles, le cryptage symétrique des données utiles est effectué au moyen d'une clé qui est formée par une combinaison XOR bit à bit de la clé de base avec une clé supplémentaire présente dans les deux points terminaux (1, 2) et qui est une clé quantique, c'est-à-dire une clé générée selon un procédé à sécurité quantique, dans lequel, s'il est utilisé en mode confort et lorsqu'une perturbation survient alors, le système de communication retombe de manière automatisée sur le mode de base.

2. Procédé selon la revendication 1, **caractérisé en ce qu'**il est utilisé dans un système de communication dans lequel les points terminaux (1, 2) reliés par la liaison de données sont deux noeuds de réseau dans un réseau.

3. Procédé selon la revendication 1 ou 2, **caractérisé en ce que** la clé supplémentaire utilisée pour la combinaison XOR bit à bit avec la clé de base est l'une parmi plusieurs clés quantiques présentes dans les deux points terminaux (1, 2),
dans lequel, en mode confort, un identifiant désignant de manière unique la clé quantique à utiliser pour la combinaison XOR bit à bit est transmis entre les deux points terminaux (1, 2), de préférence avec le secret partagé transmis en appliquant le procédé de clé publique.

4. Procédé selon l'une quelconque des revendications 1 à 3, **caractérisé en ce que** le premier point terminal (1) génère au moyen d'un générateur de nombre aléatoire quantique QRNG le nombre aléatoire transmis sous forme de secret partagé au deuxième point terminal (2) et formant la clé de base.

5. Procédé selon l'une quelconque des revendications 1 à 4, **caractérisé en ce qu'**un procédé de cryptage PQC est utilisé comme procédé de clé publique pour la transmission du nombre aléatoire transmis sous forme de secret partagé et formant la clé de base.

6. Procédé selon la revendication 5, **caractérisé en ce que** les deux points terminaux (1, 2) du système de communication s'authentifient mutuellement en appliquant un procédé de signature PQC avant la transmission du secret partagé, effectuée en appliquant le procédé de cryptage PQC.

7. Procédé selon l'une quelconque des revendications 1 à 6, **caractérisé en ce que** la clé quantique, servant de clé supplémentaire et utilisée pour la combinaison XOR bit à bit avec la clé de base, est générée ensemble par les deux points terminaux (1, 2), réalisés en conséquence à cet effet, par l'application d'un procédé QKD.

8. Procédé selon l'une quelconque des revendications 1 à 6, dans lequel les deux points terminaux (1, 2) du système de communication ne se trouvent pas dans une relation QKD mutuelle mais sont reliés respectivement par au moins deux chemins de liaison complètement disjoints à deux autres points terminaux réalisant un ensemble QKD, **caractérisé en ce que** la clé quantique servant de clé supplémentaire est mise à la disposition des deux points terminaux (1, 2) du système de communication par l'ensemble QKD au moyen d'un procédé de transmission dans lequel plusieurs séquences de bits formées par combinaison XOR bit à bit de clés quantiques générées par l'ensemble QKD, dont au moins une est formée en incluant la clé supplémentaire, sont transmises par l'ensemble QKD aux deux points terminaux (1, 2) du système de communication par respectivement l'un des chemins de combinaison disjoints, et les points terminaux du réseau de communication extraient la clé quantique à utiliser par ceux-ci comme clé supplémentaire pour la combinaison XOR bit à bit avec la clé de base, par combinaison XOR bit à bit des séquences de bits arrivant à leur niveau en provenance de l'ensemble QKD.

9. Système de communication, composé de deux points terminaux (1, 2) d'une liaison de données (3) reliant les deux points terminaux (1, 2) l'un à l'autre, dans lequel
- les deux points terminaux (1, 2) sont réalisés pour transmettre de manière cryptée des données utiles échangées par la liaison de données (3), chacun des points terminaux (1, 2) disposant à cet effet d'un encrypteur (4, 5) c'est-à-dire d'un dispositif de cryptage et de décryptage, et
- les deux points terminaux (1, 2) disposent d'une réserve commune de clés quantiques dont la clé est détenue par chacun des deux points terminaux (1, 2) dans une mémoire de clé locale (6, 7) et est gérée au moyen d'une gestion de clé locale (8, 9), et
- au moins un premier point terminal (1) des deux points terminaux (1) est réalisé pour générer des nombres aléatoires utilisés comme clés de base et dispose pour la transmission de ces clés de base au deuxième point terminal (2), selon le principe de clé publique, d'une clé publique du deuxième point terminal (2) pour laquelle il existe une clé secrète correspondant à cette clé publique et qui est en possession du deuxième point terminal (2),
**caractérisé en ce que**
a) les encrypteurs (4, 5) des deux points terminaux (1, 2) sont respectivement équipés d'un serveur PQC pour exécuter un procédé de cryptage PQC ainsi que d'une unité pour la combinaison XOR bit à bit de séquences de bits,
b) le système de communication peut fonctionner dans un mode de base et dans un mode confort, et les données utiles échangées entre les points terminaux (1, 2) dans les deux modes de fonctionnement sont respectivement cryptées de manière symétrique en utilisant une clé de base qui est échangée entre les points terminaux (1, 2) selon un procédé de cryptage PQC effectué par leurs serveurs PQC, dans lequel dans le mode de base, la clé de base est utilisée directement pour le cryptage des données utiles, et dans le mode confort, une clé qui est générée par les points terminaux (1, 2) au moyen de leur unité prévue à cet effet par une combinaison XOR bit à bit de la clé de base avec une clé quantique identique prélevée sur leur réserve commune est utilisée,
c) s'il est utilisé en mode confort et une perturbation survient alors, le système de communication retombe de manière automatisée sur le mode de base.

10. Système de communication selon la revendication 9, **caractérisé en ce que** ses points terminaux (1, 2), reliés l'un à l'autre par la liaison de données (3), sont deux noeuds de réseau dans un réseau.

11. Système de communication selon la revendication 9 ou 10, **caractérisé en ce que** les deux points terminaux (1, 2) du système de communication disposent d'un système QKD et se trouvent dans une relation QKD mutuelle pour générer les clés quantiques servant de clés supplémentaires selon un procédé QKD, c'est-à-dire selon un procédé de distribution de clé quantique.

12. Système de communication selon l'une quelconque des revendications 9 à 11, **caractérisé en ce que** son premier point terminal (1) dispose pour la génération des nombres aléatoires à utiliser comme clés de base d'un générateur de nombre aléatoire quantique QRNG.
